# EUROPEAN PATENT SPECIFICATION

(11) **EP 4 306 769 B1**
(45) Date of publication and mention of the grant of the patent: **17.12.2025**
(21) Application number: 22184721.3
(22) Date of filing: 13.07.2022
(51) Int. Cl.: F01D 5/00

(54) **REPAIR METHOD OF COMPONENTS OF CONTINUOUS FLOW ENGINES**
REPARATURVERFAHREN FÜR KOMPONENTEN VON KONTINUIERLICHEN STRÖMUNGSMASCHINEN
PROCÉDÉ DE RÉPARATION DE COMPOSANTS DE MOTEURS À ÉCOULEMENT CONTINU

(43) Date of publication of application: 17.01.2024
(73) Proprietor: Siemens Energy Global GmbH & Co. KG, 81739 München (DE)
(72) Inventor: Avdovic, Pajazit, 60209 Norrköping (SE); Eriksson, Jonas, 61294 Finspong (SE); Fornander, Jerry, 61232 Finspang (SE)

(56) References cited:
- US-A1- 2005 033 555
- US-A1- 2022 136 405

## Description

The present invention refers to a method of repairing a continuous flow engine component with a damage. Additionally, the present invention refers to an inspection device to be utilized in such method. Furthermore, the present invention refers to an evaluation system containing such inspection device to execute such method. Additionally, the present invention refers to a computer program product adapted to realize the inventive method.

Continuous flow engines like gas turbines, steam turbines and compressors are extraordinarily complex and very specialized technical devices. They represent highly reliable and flexibly to be utilized devices representing the backbone of modern industry. However, these engines suffer from their use providing a constant change of the engine itself, spontaneous changes based on maintenance and upgrade processes, and the like making them on the one hand highly reliable and durable, however, simultaneously continually deviating from the original state. Simultaneously, the requirements for such continuous flow engines are constantly increasing requiring to always optimize their utilization and increase the former theoretical limits closer to the real-life practical limits.

For example, US20050033555A1 refers to a method for evaluating a damaged blade in a compressor or turbine using a computer system accessing a database of blade repair information.

While the components utilized in such continuous flow engines are very durable and survive even very harsh conditions they are typically repairable many times, before some replacement is required. Yet this evaluation becomes even more difficult based on the above-described change of utilization. Providing also a changing type of wear out over time rendering the evaluation even by experts with decade long experience difficult or impossible. However, prematurely exchanging some component easily leads to significant losses. For example, based on the low availability of replacement parts rendering an instant replacement very difficult to impossible. While simply stocking up a vast number of corresponding spare parts is impossible based on the costs associated hereto. Thus, there is a need to provide an improved insight and evaluation, preferably, providing an improved possibility to predict future needs for such components.

These problems are solved by the methods and products as disclosed hereafter and in the claims. Further beneficial embodiments are disclosed in the dependent claims and the further description. These benefits can be used to adapt the corresponding solution to specific needs or to solve further problems.

One aspect the present invention refers to a method of repairing a continuous flow engine component according to claim 1.

Providing such method is very beneficial for continuous flow engine components. Continuous flow engines are well established devices utilized in the industry. Examples are compressors as utilized, for example, in large-scale industrial production processes like refineries or turbines like gas turbines or steam turbines as utilized in the energy production. Such devices benefit surprisingly significantly from the inventive method. For example, in case of subsequently identified problems rendering the repair unsuccessful or even merely impairing the characteristics of such continuous flow engine component being not satisfying the loss is significant. While even temporarily utilizing such component poses a significant threat of even catastrophic failure and grave damages resulting from it. Therefore, the inventive method allows to significantly reduce the risks of losses and damages rendering the additional effort for such applications essentially irrelevant. Even providing corresponding highly specialized inspection devices just for this purpose only provides a minor problem based on the benefits obtained, values to be protected and risks to be reduced or even avoided. According to a further aspect the present invention refers to a computer program product, tangibly embodied in a machine-readable storage medium, including instructions operable to cause a computing entity to execute an inventive method. According to a further aspect the present invention refers to a storage device for providing an inventive computer program product, wherein the device stores the computer program product and/or provides the computer program product for further use.

According to a further aspect the present invention refers to an evaluation system according to claim 11.

To simplify understanding of the present invention it is referred to the detailed description hereafter and the figures attached as well as their description. Herein, the figures are to be understood being not limiting the scope of the present invention but disclosing preferred embodiments explaining the invention further.
Fig. 1 shows a scheme of the inventive method.
Fig. 2 shows an inventive evaluation system to realize the inventive method.

Preferably, the embodiments hereafter contain, unless specified otherwise, at least one processor and/or data storage unit to implement the inventive method.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long-term data storage like hard drives or data storage units like CDs, DVDs, USB sticks and the like. Such data storage can additionally include or be connected to a processing unit to allow a processing of the data stored on the data storage.

The term "continuous flow engine" as used herein refers to a to a device utilizing a continuous stream of a fluid like a gas or a liquid. Herein, such continuous flow engine typically provides a rotor located in the fluid and interacting with said fluid. Herein, such fluid can either be utilized to provide a rotational movement of the rotor being able to be transformed into, for example, electrical energy. Examples of such continuous flow engines are gas turbines and steam turbines. Alternatively, the rotor can actively be rotated allowing to, for example, compress the fluid. An example of such application is a compressor as utilized, for example, in oil refineries.

According to one aspect the present invention refers to a method as specified above.

It was noted that the inspection and evaluation as provided by the inventive method is especially useful for repair processes utilizing additive manufacturing. According to further embodiments it is preferred that the repair utilizes additive manufacturing, preferably 3D printing. Such repair processes allow to flexibly repair continuous flow engine components, however, suffer from the significant effort required to realize such repair. Identifying an unsuccessful repair upfront especially for the field of continuous flow engines strongly relying on the reliability of utilized components is extremely beneficial and surprisingly possible utilizing the inventive method. Especially for methods like 3D printing providing, for example, a very well to be determined end result and heat introduction into the component to be repaired such prediction is surprisingly reliable and allows to reliable scrap components like blades representing a significant value even before starting trying to repair.

The inventors additionally noted that it is typically preferred for continuous flow engines like gas turbines and steam turbines to utilize the detailed data collected during their utilization. According to the invention, the method contains the step of retrieving sensor data from a sensor database, wherein evaluating the damage of the continuous flow engine component (11) is based on the inspection data (2), the component data (5) and the sensor data. Continuous flow engines like gas turbines and steam turbines, especially the highly strained gas turbines, can beneficially make use of the sensor data like the sensor data of blades and vanes collected during their utilization. For example, vibration data can be beneficially combined with inspection data of the continuous flow engine component to evaluate the completeness of the evaluation or whether a corresponding damage includes cracks extending beyond the amount noted during the inspection. Not only enabling to trigger a second inspection, but also based on component data of comparable damaged continuous flow engine components even enabling to identify grave damages based on the deviations of expected sensor data and collected inspection data. As certain deviations can be attributed, for example, to deep cracks extending far into the continuous flow engine component endangering its later utilization even after extensive repair steps.

Furthermore, it was noted that it becomes possible to not solely decide on whether a component cannot be repaired by an intended additive manufacturing method, but also automatically provide suggestions of changes repair processes. According to further embodiments it is preferred that the evaluation contains the step of evaluating potential subtractive manufacturing methods in case the repair cannot be executed with additive manufacturing methods alone.

Typically, it is preferred that the evaluation furthermore contains the outcome of combining the required subtractive and additive manufacturing steps to repair the continuous flow engine component. Herein, the output contains and assessment with regard to the required effort, required time, and/or resulting impact on the continuous flow engine components properties when executing such repair. Utilizing the inventive method allows to avoid unnecessarily executing multiple repair steps ending up in a component not fulfilling anymore the requirements of the demanded utilization. For example, the required subtractive manufacturing steps can easily lead to introducing too much heat into the component influencing the microstructure and reducing the overall strength of the component. Thus, ending up in the complex repair being carried out first removing material and thereafter adding material while the resulting continuous flow engine component does not provide the overall required mechanical stability under the intended temperature of usage leading to the scrapping of the component after measuring its properties or even catastrophic failure of such component in a continuous flow engine when being utilized.

Furthermore, it was noted that it is beneficial on the long term to provide a system of continuous flow engine components already providing the unique identifier. According to further embodiments it is preferred that the continuous flow engine component contains the unique identifier. This allows to significantly reduce the risk of human error based on mixing up two similar continuous flow engines. Becoming especially important for the inventive method aiming at a high number of components to be processed in a short time frame. And differentiating between differences of such damages not visible to be naked eye rendering such feature very important.

Additionally, it is typically beneficial to utilize a virtual model of the continuous flow engine component. According to further embodiments it is preferred that the method contains the step of utilizing a virtual model of the continuous flow engine component to simulate its behavior during the later usage to provide the evaluation of the damaged continuous flow engine component. While this requires a significant additional processing power the further achieved improvement of the reliability evaluation of cases being at the border of repairable or irreparable is for many applications justifying such additional effort. Especially, in case the continuous flow engine component is a turbine vane or turbine blade such virtual model is surprisingly beneficial to further improve the insight.

While the whole method can be executed at the desired location a more distributed approach is often to be preferred. According to further embodiments it is preferred that the evaluation is executed at a location being remote from the inspection. Such arrangement allows to, for example, utilize a centrally located higher processing power and/or central databases that should not be easily available through the internet. Typically, it is preferred that the evaluation is executed at the centralized processing unit receiving inspection data of a plurality of continuous flow engine component plurality of remotely located inspection databases. Such arrangement reduces the overall processing power required while making best use of already available central databases containing relevant data.

It is further possible to collect all required data at a single location. Yet for typical applications this is not necessarily the best approach. According to further embodiments it is preferred that the inspection database and the component database are different database, preferably wherein the component database is a remote database. Especially, splitting these databases in such way allows to make best use of already available databases, while the inspection data is typically preferably locally stored to enable a reliable and time saving collection of data to, for example, surprisingly smoothen the overall process.

Such component database preferably contains component specific data like technical specifications, manufacturing data, prior inspection data of the component or the like. However, it is typically also preferred to include generic component data like generic collected data of the same component and their wear, repairs and the like collected over time. Additionally, it can be preferred to include data of different continuous flow engine components. Like gas turbine blades and gas turbines vanes being manufactured from a comparable material, providing a comparable shape and design, providing a comparable wear out behavior and/or the like.

It was noted that it is for many applications beneficial to utilize some behavior related data. According to further embodiments it is preferred that the component data contains component data of different continuous flow engine components, wherein the component data of different continuous flow engine components is selected based on the wear out behavior of the components. Such wear out behavior can be based on the crack development and/or lifetime reduction in view of its utilization resulting in several components like different gas turbine vanes and gas turbine blades of the same or different gas turbine showing a comparable wear out during their lifetime. Allowing to very easily identify sources of relevant component data with very little required processing power.

While many types of component data can be beneficially utilized it was noted that certain component data is typically especially useful for such purpose. According to further embodiments it is preferred that the component data contains at least one from the group consisting of a CAD model of the continuous flow engine component, utilization data of the continuous flow engine component. These types of data are typically especially useful to execute the inventive method. Typically, it is preferred that the component data contains at least two, more preferred all three of the aforementioned types of component data.

The term "utilization data" as used herein refers to data referring to the intended utilization of the continuous flow engine component. For example, such data can be based on generic guidelines of utilization. Typically, it is preferred that the utilization data is "component specific utilization data". Such component specific utilization data as used herein refers to specific requirements of the intended utilization of the component based on the very specific usage. Like the continuous flow engine the continuous flow engine component is intended to be used therein. It is even possible to utilize the specific intended operating conditions to further optimize the evaluation of the continuous flow engine component.

Furthermore, it was noted that a generic spare parts management can be significantly improved utilizing the inventive method. According to further embodiments it is preferred that the output contains an estimated number of subsequent repairs being possible before the continuous flow engine component is rendered irreparable, wherein the estimated number of subsequent repairs being possible before the continuous flow engine component is rendered irreparable is stored in a database along with the unique identifier of the continuous flow engine component and/or the estimated number of subsequent repairs being possible before the continuous flow engine component is rendered irreparable stored within or on the continuous flow engine component during a subsequent repair. Surprisingly, it was noted that such embodiment makes effective use of the additional data provided by the inventive method. Simultaneously, it solves a need that to this point was solved by the expertise of the experts and estimations based on year long experience and expertise how many subsequent repairs some component might withstand before a replacement is needed. This is especially substantial for continuous flow engines like gas turbines requiring a very high reliability that required spare parts are available while corresponding replacements are not easily available and each component is typically quite expensive being a demanding challenge for some operator to be cared for.

While the output can be stored or directly forwarded to a specific person or interface it was noted that at least storing it additionally in a distributed database provides certain benefits. According to further embodiments it is preferred that the output is stored in a distributed database, preferably a blockchain along with the unique identifier of the continuous flow engine component. It was noted that this allows to efficiently increase the safety and security of repairs and utilization of repaired continuous flow engine components. Furthermore, the possibility to keep track of such evaluations is deemed to provide a significantly increased interest based on insurance and safety requirements based on the possibility to identify faults of failure subsequently. Thus, storing the output at such database allows to make very efficient use for such applications.

Furthermore, it was noted that for typical embodiments it is preferred to provide such inspection device with an interface. According to a further aspect the present invention refers to an inspection device containing at least one processing unit, wherein the inspection device is adapted to scan the continuous flow engine component providing a damage and provide the inspection data to be utilized in an inventive method, wherein the inspection device is adapted to receive the output, wherein the inspection device is adapted to provide the output to an interface to be utilized by an operator. Surprisingly, it was noted that the evaluation whether the component can be repaired or not can be provided very fast. Providing the inspection with communication means and protocols to, for example, make use of a wireless network to provide make use of some remotely located processing unit to execute the evaluation and merely return the output. Allowing to enable the operator to instantly start the repair process or label the component to be scrapped.

According to further embodiments it is preferred that the inspection device is adapted to encrypt data transmitted from the inspection device and decrypt data received from a network the inspection device is connected to. Typically, it is preferred that the encryption is based on a hardware encryption like a blockchain chip being contained in the inspection device. Including such means for encrypting the data of the inspection device is surprisingly beneficial as it was noted that the need to secure the data is quite important. For example, on the one hand it was noted that the data should not be easily stolen by a third party to gain insight into the components utilized and possible weaknesses. Further, it was noted that such encryption allows to secure that the data has not been tampered with. Providing a significant benefit for future business relationships demanding an increased insight and stronger cooperation.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

According to a further aspect the present invention refers to an evaluation system containing an inventive inspection device, an inspection database, at least one continuous flow engine component database, at least one processing unit, wherein the processing unit is adapted to execute the evaluation of an inventive method.

It was noted that such system is typically beneficially established by locating the inspection device and the processing unit at remote location. Especially, utilizing such centralized evaluation utilizing a central processing and utilizing databases located at such location is surprisingly beneficial.

The following detailed description of the figure uses the figure to discuss illustrative embodiments, which are not to be construed as restrictive, along with the features and further advantages thereof.

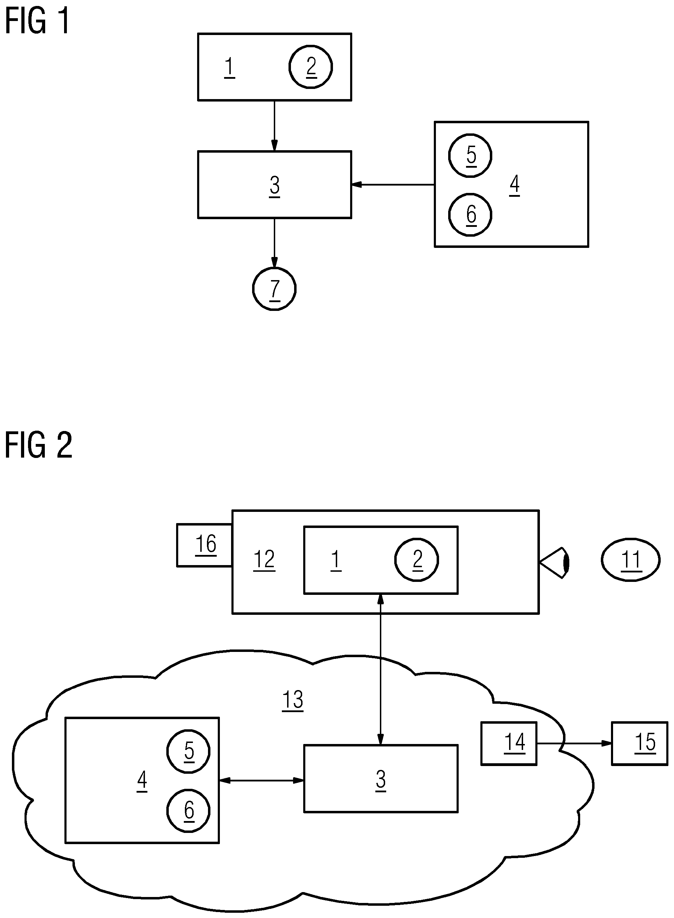

Figure 1 shows a scheme of the inventive method. Herein, the inspection data 2 of a damaged continuous flow engine component is retrieved from the inspection database 1 based on a unique identifier of a continuous flow engine component by a processing unit 3. Said processing unit 3 retrieves component data 5 from a continuous flow engine component database 4. The example of the inventive method as shown in figure 1 additionally contains data 6 regarding the utilization of the continuous flow engine component that is retrieved by the processing unit 3.

Based on the data acquired the processing unit 3 evaluates the damage of the continuous flow engine component. Based on the evaluation the processing unit 3 creates an output 7 contains data whether the continuous flow engine component can be repaired and an estimated number of subsequent repairs being possible before the continuous flow engine component is rendered irreparable.

Figure 2 shows an inventive evaluation system to realize the inventive method. Herein, the inspection device 12 is utilized to scan the continuous flow engine component 11. The acquired inspection data 2 is stored in the inspection database 1. Said inspection database 1 of the example as shown in figure 2 is integrated into the inspection device 12.

The system furthermore contains a continuous flow engine component database 4 containing component data 5 and additionally data 6 regarding the utilization of the continuous flow engine component.

The processing unit 3 as well as the retrieves the data from the inspection database 1 and the continuous flow engine component database 4 are located in a cloud environment 13. An internet connection is utilized by the inspection device 12 to exchange data with the cloud located part of the system. This allows to, for example, rely on the expertise of a continuous flow engine manufacturer being able to provide continuous updates of the evaluation system and detailed expertise and insight into such system to flexibly adapt the evaluation system even to very unusual situations.

The evaluation is stored in an evaluation database 14 to be flexibly retrieved by the owner 15 of the continuous flow engine component 11 on demand. For example, a batch of corresponding data with regard to the estimated remaining numbers of possible repairs can be retrieved to stock up spare parts and tailor the existing stock of components as required. Furthermore, the output is sent to the inspection device 12. The information whether the component can be repaired is shown on the interface 16 to allow an operator of the inspection device whether to assign a repair task to the continuous flow engine component 11 or whether to trigger a scrapping process.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of repairing a continuous flow engine component (11) with a damage,
wherein the method contains the steps of
- identifying the continuous flow engine component (11) based on a unique identifier,
- retrieving inspection data (2) of the continuous flow engine component (11) from an inspection database (1) containing data of a damage of the continuous flow engine component (11),
- retrieving component data (5) from at least one continuous flow engine component database (4),
- automatically evaluating the damage of the continuous flow engine component (11) based on the inspection data (2) and the component data (5),
- automatically generating an output (7), wherein the output (7) contains data whether the continuous flow engine component (11) can be repaired and/or an estimated number of subsequent repairs being possible before the continuous flow engine component (11) is rendered irreparable,
**characterized in that** the method contains the step of retrieving sensor data collected during utilization of the component from a sensor database,
wherein evaluating the damage of the continuous flow engine component (11) is based on the inspection data (2), the component data (5) and the sensor data.

2. Method according to claim 2, wherein the repair utilizes additive manufacturing, preferably 3D printing.

3. Method according to any of claims 1 to 2, wherein the continuous flow engine component (11) contains the unique identifier.

4. Method according to any of claims 1 to 3, wherein the method contains the step of utilizing a virtual model of the continuous flow engine component (11) to simulate its behavior during the later usage to provide the evaluation of the damaged continuous flow engine component (11).

5. Method according to any of claims 1 to 4, wherein the evaluation is executed at a location being remote from the inspection.

6. Method according to any of claims 1 to 5, wherein the inspection database (1) and the component database (4) are different databases, preferably wherein the component database (4) is a remote database.

7. Method according to any of claims 1 to 6, wherein the component data (5) contains at least one from the group consisting of a CAD model of the continuous flow engine component (11), utilization data (6) of the continuous flow engine component (11).

8. Method according to any of claims 1 to 7, wherein the output (7) contains an estimated number of subsequent repairs being possible before the continuous flow engine component (11) is rendered irreparable,
wherein the estimated number of subsequent repairs being possible before the continuous flow engine component (11) is rendered irreparable is stored in a database along with the unique identifier of the continuous flow engine component (11) and/or the estimated number of subsequent repairs being possible before the continuous flow engine component (11) is rendered irreparable stored within or on the continuous flow engine component (11) during a subsequent repair.

9. Computer program product, tangibly embodied in a machine-readable storage medium, including instructions operable to cause a computing entity to execute a method according to any of claims 1 to 8.

10. Storage device for providing a computer program product according to claim 9, wherein the device stores the computer program product and/or provides the computer program product for further use.

11. Evaluation system containing an inspection device (12), an inspection database (1), at least one continuous flow engine component database (4), at least one processing unit (3),
wherein the processing unit (3) is adapted to execute the evaluation of a method according to any of claims 1 to 8,
wherein the inspection device (12) contains at least one processing unit (3),
wherein the inspection device (12) is adapted to scan the continuous flow engine component (11) providing a damage and provide the inspection data (2) to be utilized in a method according to any of claims 1 to 8,
wherein the inspection device (12) is adapted to receive the output (7),
wherein the inspection device (12) is adapted to provide the output (7) to an interface (16) to be utilized by an operator wherein the evaluation system contains a storage device according to claim 10.

12. Evaluation system according to claim 11, wherein the inspection device (12) is adapted to encrypt data transmitted from the inspection device (12) and decrypt data received from a network the inspection device (12) is connected to.

## Patentansprüche

1. Verfahren zum Reparieren einer Komponente (11) einer Maschine mit kontinuierlichem Durchfluss mit einem Schaden,
wobei das Verfahren die folgenden Schritte enthält:
- Identifizieren der Komponente (11) einer Maschine mit kontinuierlichem Durchfluss basierend auf einer eindeutigen Kennung,
- Abrufen von Inspektionsdaten (2) der Komponente (11) einer Maschine mit kontinuierlichem Durchfluss aus einer Inspektionsdatenbank (1), die Daten eines Schadens der Komponente (11) einer Maschine mit kontinuierlichem Durchfluss enthält,
- Abrufen von Komponentendaten (5) aus mindestens einer Datenbank (4) für Komponenten einer Maschine mit kontinuierlichem Durchfluss,
- automatisches Bewerten des Schadens der Komponente (11) einer Maschine mit kontinuierlichem Durchfluss basierend auf den Inspektionsdaten (2) und den Komponentendaten (5),
- automatisches Erzeugen einer Ausgabe (7), wobei die Ausgabe (7) Daten darüber enthält, ob die Komponente (11) einer Maschine mit kontinuierlichem Durchfluss repariert werden kann, und/oder über eine geschätzte Anzahl von nachfolgenden Reparaturen, die möglich sind, bevor die Komponente (11) einer Maschine mit kontinuierlichem Durchfluss irreparabel wird, **gekennzeichnet dadurch, dass** das Verfahren den Schritt des Abrufens von Sensordaten enthält, die während einer Verwendung der Komponente aus einer Sensordatenbank gesammelt werden, wobei das Bewerten des Schadens der Komponente (11) einer Maschine mit kontinuierlichem Durchfluss auf den Inspektionsdaten (2), den Komponentendaten (5) und den Sensordaten basiert.

2. Verfahren nach Anspruch 2, wobei die Reparatur additive Fertigung, bevorzugt 3D-Druck, verwendet.

3. Verfahren nach einem der Ansprüche 1 bis 2, wobei die Komponente (11) einer Maschine mit kontinuierlichem Durchfluss die eindeutige Kennung enthält.

4. Verfahren nach einem der Ansprüche 1 bis 3, wobei das Verfahren den Schritt des Verwendens eines virtuellen Modells der Komponente (11) einer Maschine mit kontinuierlichem Durchfluss enthält, um ihr Verhalten während der späteren Verwendung zu simulieren, um die Bewertung der beschädigten Komponente (11) einer Maschine mit kontinuierlichem Durchfluss bereitzustellen.

5. Verfahren nach einem der Ansprüche 1 bis 4, wobei die Bewertung an einem Ort ausgeführt wird, der von der Inspektion entfernt ist.

6. Verfahren nach einem der Ansprüche 1 bis 5, wobei die Inspektionsdatenbank (1) und die Komponentendatenbank (4) unterschiedliche Datenbanken sind, wobei die Komponentendatenbank (4) bevorzugt eine entfernte Datenbank ist.

7. Verfahren nach einem der Ansprüche 1 bis 6, wobei die Komponentendaten (5) mindestens eines aus der Gruppe, die aus einem CAD-Modell der Komponente (11) einer Maschine mit kontinuierlichem Durchfluss und Nutzungsdaten (6) der Komponente (11) einer Maschine mit kontinuierlichem Durchfluss besteht, enthalten.

8. Verfahren nach einem der Ansprüche 1 bis 7, wobei die Ausgabe (7) eine geschätzte Anzahl von nachfolgenden Reparaturen, die möglich sind, bevor die Komponente (11) einer Maschine mit kontinuierlichem Durchfluss irreparabel wird, enthält,
wobei die geschätzte Anzahl von nachfolgenden Reparaturen, die möglich sind, bevor die Komponente (11) einer Maschine mit kontinuierlichem Durchfluss irreparabel wird, in einer Datenbank gemeinsam mit einer eindeutigen Kennung der Komponente (11) einer Maschine mit kontinuierlichem Durchfluss gespeichert wird und/oder die geschätzte Anzahl von nachfolgenden Reparaturen, die möglich sind, bevor die Komponente (11) einer Maschine mit kontinuierlichem Durchfluss irreparabel wird, während einer nachfolgenden Reparatur innerhalb oder auf der Komponente (11) einer Maschine mit kontinuierlichem Durchfluss gespeichert.

9. Computerprogrammprodukt, das physisch in einem maschinenlesbaren Speichermedium verkörpert ist und Anweisungen beinhaltet, die dazu betreibbar sind, eine Rechenentität dazu zu veranlassen, ein Verfahren nach einem der Ansprüche 1 bis 8 auszuführen.

10. Speichervorrichtung zum Bereitstellen eines Computerprogrammprodukts nach Anspruch 9, wobei die Vorrichtung das Computerprogrammprodukt speichert und/oder das Computerprogrammprodukt zur weiteren Verwendung bereitstellt.

11. Bewertungssystem, das eine Inspektionsvorrichtung (12), eine Inspektionsdatenbank (1), mindestens eine Datenbank (4) für Komponenten einer Maschine mit kontinuierlichem Durchfluss und mindestens eine Verarbeitungseinheit (3) enthält,
wobei die Verarbeitungseinheit (3) dazu angepasst ist, die Bewertung eines Verfahrens nach einem der Ansprüche 1 bis 8 auszuführen,
wobei die Inspektionsvorrichtung (12) mindestens eine Verarbeitungseinheit (3) enthält,
wobei die Inspektionsvorrichtung (12) dazu angepasst ist, die Komponente (11) einer Maschine mit kontinuierlichem Durchfluss abzutasten, um einen Schaden bereitzustellen, und die Inspektionsdaten (2) bereitzustellen, die in einem Verfahren nach einem der Ansprüche 1 bis 8 zu verwenden sind,
wobei die Inspektionsvorrichtung (12) dazu angepasst ist, die Ausgabe (7) zu empfangen,
wobei die Inspektionsvorrichtung (12) dazu angepasst ist, die Ausgabe (7) an eine Schnittstelle (16) bereitzustellen, um durch einen Bediener verwendet zu werden
wobei das Bewertungssystem eine Speichervorrichtung nach Anspruch 10 enthält.

12. Bewertungssystem nach Anspruch 11, wobei die Inspektionsvorrichtung (12) dazu angepasst ist, Daten, die von der Inspektionsvorrichtung (12) übertragen werden, zu verschlüsseln und Daten, die von einem Netzwerk empfangen werden, mit dem die Inspektionsvorrichtung (12) verbunden ist, zu entschlüsseln.

## Revendications

1. Procédé de réparation d'un composant de moteur à flux continu (11) endommagé,
dans lequel le procédé contient les étapes suivantes
- l'identification du composant de moteur à flux continu (11) sur la base d'un identifiant unique,
- la récupération de données d'inspection (2) du composant de moteur à flux continu (11) à partir d'une base de données d'inspection (1) contenant des données d'un endommagement du composant de moteur à flux continu (11),
- la récupération de données de composant (5) à partir d'au moins une base de données de composant de moteur à flux continu (4),
- l'évaluation automatique de l'endommagement du composant de moteur à flux continu (11) sur la base des données d'inspection (2) et des données de composant (5),
- la génération automatique d'une sortie (7), dans lequel la sortie (7) contient des données indiquant si le composant de moteur à flux continu (11) peut être réparé et/ou un nombre estimé de réparations ultérieures pouvant être effectuées avant que le composant de moteur à flux continu (11) ne soit rendu irréparable,
**caractérisé en ce que** le procédé contient l'étape de récupération de données de capteur collectées pendant l'utilisation du composant à partir d'une base de données de capteur,
dans lequel l'évaluation de l'endommagement du composant de moteur à flux continu (11) est basée sur des données d'inspection (2), des données de composant (5) et des données de capteur.

2. Procédé selon la revendication 2, dans lequel la réparation utilise une fabrication additive, de préférence une impression 3D.

3. Procédé selon l'une quelconque des revendications 1 à 2, dans lequel le composant de moteur à flux continu (11) contient l'identifiant unique.

4. Procédé selon l'une quelconque des revendications 1 à 3, dans lequel le procédé contient l'étape d'utilisation d'un modèle virtuel du composant de moteur à flux continu (11) pour simuler son comportement pendant l'utilisation ultérieure pour fournir l'évaluation du composant de moteur à flux continu endommagé (11).

5. Procédé selon l'une quelconque des revendications 1 à 4, dans lequel l'évaluation est exécutée à un emplacement éloigné de l'inspection.

6. Procédé selon l'une quelconque des revendications 1 à 5, dans lequel la base de données d'inspection (1) et la base de données de composants (4) sont des bases de données différentes, de préférence dans lequel la base de données de composants (4) est une base de données distante.

7. Procédé selon l'une quelconque des revendications 1 à 6, dans lequel les données de composant (5) contiennent au moins l'une du groupe constitué d'un modèle CAD du composant de moteur à flux continu (11), de données d'utilisation (6) du composant de moteur à flux continu (11).

8. Procédé selon l'une quelconque des revendications 1 à 7, dans lequel la sortie (7) contient un nombre estimé de réparations ultérieures possibles avant que le composant de moteur à flux continu (11) ne soit rendu irréparable,
dans lequel le nombre estimé de réparations ultérieures possibles avant que le composant de moteur à flux continu (11) ne soit rendu irréparable est stocké dans une base de données avec l'identifiant unique du composant de moteur à flux continu (11) et/ou le nombre estimé de réparations ultérieures possibles avant que le composant de moteur à flux continu (11) ne soit rendu irréparable stocké à l'intérieur ou sur le composant de moteur à flux continu (11) pendant une réparation ultérieure.

9. Produit de programme informatique, incorporé de manière tangible dans un support de stockage lisible par machine, comprenant des instructions utilisables pour amener une entité informatique à exécuter un procédé selon l'une quelconque des revendications 1 à 8.

10. Dispositif de stockage pour fournir un produit de programme informatique selon la revendication 9, dans lequel le dispositif stocke le produit de programme informatique et/ou fournit le produit de programme informatique pour une utilisation ultérieure.

11. Système d'évaluation contenant un dispositif d'inspection (12), une base de données d'inspection (1), au moins une base de données de composant de moteur à flux continu (4), au moins une unité de traitement (3),
dans lequel l'unité de traitement (3) est adaptée pour exécuter l'évaluation d'un procédé selon l'une quelconque des revendications 1 à 8,
dans lequel le dispositif d'inspection (12) contient au moins une unité de traitement (3),
dans lequel le dispositif d'inspection (12) est adapté pour balayer le composant de moteur à flux continu (11) fournissant un endommagement et fournir les données d'inspection (2) à utiliser dans un procédé selon l'une quelconque des revendications 1 à 8,
dans lequel le dispositif d'inspection (12) est adapté pour recevoir la sortie (7),
dans lequel le dispositif d'inspection (12) est adapté pour fournir la sortie (7) à une interface (16) à utiliser par un opérateur
dans lequel le système d'évaluation contient un dispositif de stockage selon la revendication 10.

12. Système d'évaluation selon la revendication 11, dans lequel le dispositif d'inspection (12) est adapté pour chiffrer des données transmises depuis le dispositif d'inspection (12) et déchiffrer des données reçues depuis un réseau auquel le dispositif d'inspection (12) est connecté.
